(19) Europäisches Patentamt
European Patent Office
Office européen des brevets

(11) **EP 1 980 539 A1**

(12) **DEMANDE DE BREVET EUROPEEN**

(43) Date de publication:
**15.10.2008 Bulletin 2008/42**

(51) Int Cl.:
*C03C 17/36* *(2006.01)*

(21) Numéro de dépôt: **07104429.1**

(22) Date de dépôt: **19.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **AGC Flat Glass Europe SA**
**1170 Bruxelles (BE)**

(72) Inventeur: **La désignation de l'inventeur n'a pas encore été déposée**

(74) Mandataire: **Decamps, Alain René François et al**
**AGC Flat Glass Europe SA**
**Intellectual Property Department**
**R&D Centre**
**Rue de l'Aurore, 2**
**6040 Jumet (BE)**

(54) **Vitrage à faible emissivite**

(57)     La présente invention concerne un vitrage revêtu d'un ensemble de couches minces par dépôt sous vide, vitrage présentant des propriétés de réflexion des rayonnements infrarouges tout en conservant une transmission élevée dans le domaine visible et qui conservent ses propriétés lorsqu'il est soumis à un traitement thermique de type bombage/trempe. Le vitrage comprend une ou plusieurs couches à base d'argent et des couches diélectriques dont au moins une couche diélectrique sous-jacente par rapport à au moins une couche à base d'argent est une couche à base d'oxyde ou d'oxy-nitrure de titane de type TiMOx ou TiMOxNy, dans laquelle M est un métal, ou plusieurs métaux, ou le silicium, ces métaux ou silicium étant en proportion atomiques suffisantes pour prévenir une transformation significative de la structure cristallographique de la couche à base d'oxyde de titane précédemment déposée sous l'effet du traitement thermique.

Fig. 1

EP 1 980 539 A1

Printed by Jouve, 75001 PARIS (FR)

**Description**

La présente invention concerne les vitrages à faible émissivité autrement dit les vitrages qui réfléchissent une très large part des rayons infrarouges et laissent passer les rayons de longueur d'onde du visible. De manière plus précise l'invention concerne les vitrages à faible émissivité qui conservent ou améliorent leurs caractéristiques opto-énergétiques lorsqu'ils sont soumis à un traitement thermique intense tel qu'une trempe thermique et/ou une opération de bombage.

Les vitrages à faible émissivité et à transmission lumineuse élevée sont traditionnellement obtenus en appliquant sur une feuille de verre une couche métallique mince, notamment une couche à base d'argent, laquelle est protégée contre les diverses altérations possibles par des couches protectrices de nature diélectrique.

Les couches sont appliquées par une technique de dépôt sous vide du type dit « sputtering », le matériau des couches est obtenu à partir de cibles bombardées par des particules ionisées qui détachent les éléments de la cible lesquels, éventuellement après réaction avec les composants de l'atmosphère se déposent sur la feuille de verre constituant le substrat.

La structure de base traditionnelle, lorsque l'ensemble comporte une seule couche d'argent est du type :
verre/diélectrique I/Ag/barrière/diélectrique II

Dans ce type de structure la couche barrière est mise en oeuvre essentiellement pour protéger la couche métallique d'argent d'une possible dégradation lors de l'application de la couche diélectrique II. C'est le cas en particulier lorsque cette dernière est déposée suivant une technique dite "réactive" dans laquelle le dépôt est réalisé à partir de cibles métalliques dans une atmosphère réagissant avec le métal déposé, notamment une atmosphère oxydante ou nitrurante.

Les diélectriques 1 et II ont plusieurs fonctions. Ils sont nécessaires pour constituer un filtre interférentiel qui permet de réduire la réflexion des longueurs d'onde visible, et par conséquent permettent d'accroître la transmission lumineuse. Ils sont mis en oeuvre aussi de façon que la fraction réfléchie dans le visible conduise à une neutralité de couleur aussi poussée que possible, et en particulier que la réflexion ne conduise pas à des nuances pourpres pour satisfaire aux préférences des clients à ce sujet. De surcroît le choix des couches diélectriques, ou systèmes de couches diélectriques, est tel que la neutralité en réflexion soit obtenue pour le plus large domaine d'angles d'incidence par rapport au vitrage.

En dehors de ces fonctions proprement optiques, les couches diélectriques doivent dans toute la mesure du possible conduire à la formation d'une couche métallique dont les propriétés sont optimisées. Pour une même quantité de métal déposée, la couche peut en effet conduire à une émissivité plus ou moins élevée selon la façon dont elle se forme au contact des diélectriques et notamment du diélectrique I. Le brevet US 5 110 662, enseigne ainsi que l'usage d'une couche d'oxyde de zinc de faible épaisseur immédiatement sous la couche métallique permet d'améliorer sensiblement les propriétés de l'ensemble en particulier pour ce qui concerne l'émissivité. Cette amélioration semble provenir de la structure de cette couche de zinc qui présenterait une interface bien régulière avec la couche métallique déposée, favorisant la croissance de cette dernière dans une structure bien contrôlée.

Pour de multiples applications les vitrages avec les systèmes de couches, doivent pouvoir supporter un traitement thermique du type bombage/trempe. Dans ces traitements qui portent les vitrages à des températures qui peuvent atteindre et même dépasser 600°C pendant plusieurs minutes, les systèmes de couches peuvent se modifier. Suivant les conditions, ces modifications peuvent améliorer certaines propriétés, notamment l'émissivité, par ce qui semble être une transformation de la structure cristalline des couches à base d'argent. Mais ceci requiert le choix très particulier des ensembles de couches. A défaut, le plus généralement on observe une dégradation d'une ou plusieurs des propriétés fondamentalement recherchées pour ces vitrages, qu'il s'agisse par exemple de l'émissivité, de la coloration en réflexion ou encore de l'apparition d'un voile (« haze »).

Les systèmes mis en oeuvre sont le résultat de difficiles sélections, tant en ce qui concerne les matériaux des couches que celui de leur agencement dans ces empilages, la modification d'une caractéristique pour améliorer une propriété étant susceptible de se répercuter de manière négative sur d'autres propriétés.

Par ailleurs, les exigences en matière de performances d'isolation sont toujours accrues. Si les vitrages, trempables ou non, présentant une émissivité de moins de 0,04 répondaient aux règlementations jusqu'à une époque récente, les règlementations les plus sévères nécessitent maintenant des vitrages dont l'émissivité ne dépasse pas 0,038, ou, selon les termes de ces réglementations, dans lequel le coefficient $\underline{u}$, pour un vitrage isolant composé de deux feuilles de verre 4mm d'épaisseur, le système de couches étant en position 3 et l'espace entre les feuilles étant à 90% d'argon et 10% d'air sec, est tel que

$$u \leq 1,1 \text{W/m}^2.$$

Pour atteindre ces performances thermiques, un moyen connu consiste à accroître l'épaisseur de la couche ou des couches d'argent. En procédant à cette modification, le système par ailleurs restant inchangé, il est connu que la neutralité de couleur en réflexion est perdue. Les vitrages modifiés offrent une réflexion de couleur pourpre.

Pour rétablir une certaine neutralité dans le système interférentiel que constitue le système de couches, il est connu qu'il est alors nécessaire d'accroître simultanément le chemin optique correspondant aux couches situées sous l'argent. Cette manière de procéder n'est pas sans incidence sur d'autres propriétés, notamment 11a transmission lumineuse ou la formation de voile.

Pour obtenir le meilleur compromis entre une bonne transmission lumineuse et une bonne neutralité, il est également connu d'utiliser sous l'argent des couches à indice de réfraction élevées pour limiter l'augmentation d'épaisseur de ces couches diélectriques et les inconvénients qui en découlent.

Parmi les couches répondant à cette condition l'oxyde de titane présente l'avantage, en plus d'un coût relativement bas, d'une bonne transmission lumineuse et d'une grande stabilité chimique. Pour cette raison l'utilisation de couches d'oxyde de titane peut sembler avantageuse. Cette utilisation l'est effectivement pour les vitrages qui ne sont pas soumis à un traitement thermique postérieur à la formation des couches. Pour ces vitrages, les systèmes comportent donc souvent une couche plus ou moins épaisse d'oxyde de titane.

A l'expérience les inventeurs ont constatés que l'introduction d'une couche de titane parmi celles situés sous la couche d'argent, conduisait à une dégradation des propriétés de cette couche après que le vitrage ait été soumis à un traitement thermique du type bombage/trempe. Cette dégradation est constatée alors même que la couche d'argent n'est pas même au contact de la couche de titane

Bien que l'étude des mécanismes entrepris par les inventeurs ne soit pas achevée, il semble que cette altération soit liée un dérangement de la structure du système de couches initialement déposé. Le traitement thermique aurait pour conséquence une perturbation de l'interface de la couche d'argent avec les couches au contact desquels elle se trouve.

Cette modification qui pourrait provenir de celle des couches contiguës, peut être aussi induite par contrecoup, par des couches qui ne sont pas au contact direct de l'argent. Le premier cas est celui par exemple dans lequel une couche sur laquelle repose l'argent présente une interface irrégulière comme celle provenant d'une structure colonnaire trop marquée. Une structure de ce type peut se trouve par exemple dans les couches d'oxyde de zinc d'épaisseur excessive, alors même qu'une couche de faible épaisseur, comme indiqué ci-dessus, est au contraire très favorable à la croissance d'une couche d'argent présentant de bonnes propriétés.

Il apparaît, pour une raison qui n'est pas parfaitement analysée, que la présence d'une couche d'oxyde de titane qui présente nécessairement une certaine épaisseur pour jouer le rôle de couche anti-réfléchissante dans le système interférentiel, conduit à un réarrangement de la structure de ce système lorsqu'il est soumis à un traitement thermique du type bombage/trempe.

Il est connu que l'oxyde de titane se présente sous des structures variées selon les conditions dans lesquelles la couche est formée. Dans les conditions qui influent sur la structure de cette couche, différents facteurs ont été identifiés. La nature de l'atmosphère dans laquelle le "sputtering" est effectué, notamment la concentration en oxygène de cette atmosphère intervient. La vitesse avec laquelle le dépôt est obtenu est un autre facteur reconnu antérieurement. Dans tous les cas les études sur la nature des couches montrent que l'oxyde de titane est soit amorphe soit sous forme rutile, soit sous forme anatase, soit encore, et c'est la très grande majorité des cas, sous forme d'un mélange de ces diverses formes.

Il est encore connu que les conditions dans lesquelles les couches sont placées peuvent conduire à une modification progressive de leur structure. Les inventeurs ont constatés que les couches d'oxyde de titane soumises à des traitements thermiques subissent des modifications dans leur structure, modification qui semblent être la cause de l'altération des propriétés des couches situées directement ou nom au dessus d'elles.

Un but de l'invention est donc, dans un système comprenant au moins une couche à base d'oxyde de titane, de proposer des moyens permettant de faire en sorte que la structure de cette couche reste sensiblement inchangée lorsqu'elle est soumise à un traitement thermique de type bombage/trempe.

Un autre but de l'invention est de proposer des systèmes de couches comprenant au moins une couche à base d'argent sous laquelle se trouve une couche à base d'oxyde ou d'oxy-nitrure de titane présentant cette propriété de sensiblement conserver sa structure même soumise à ces traitements.

Un autre but de l'invention est de proposer des vitrages comportant un ensemble de couches dont au moins une couche d'argent réfléchissant sélectivement les infrarouges, et des couches diélectriques déréfléchissantes situées au-dessus et au dessous de la couche d'argent, au moins une couche située sous l'argent étant une couche à base d'oxyde de titane présentant cette propriété de sensiblement conserver sa structure même soumise à ces traitements thermiques.

Un but de l'invention est aussi de proposer des vitrages trempés et/ou bombés comprenant les systèmes de couches indiqués ci-dessus.

Les inventeurs ont montrés que ces buts pouvaient être atteints, au moins en partie, en constituant des couches à base d'oxyde ou d'oxy-nitrure de titane de type TiMOx ou TiMOxNy, dans lesquelles M est métal ou plusieurs métaux ou le silicium, ces métaux ou le silicium étant introduits en quantité tels, qu'ils modifient la structure de la couche pour la rendre pratiquement insensible aux traitements thermiques de type bombage/trempe.

Les inventeurs partant de la constatation que les changements de structure cristalline consécutifs aux traitements thermiques considérés induisent des modifications, notamment à l'interface des couches, associent ces modifications à l'altération des propriétés des couches d'argent situées au-dessus de ces couches à base d'oxyde de titane.

De façon avantageuse les inventeurs proposent aussi de choisir le ou les métaux ou le silicium entrant dans la composition de la couche à base d'oxyde ou d'oxy-nitrure de titane en fonction de leur contribution propre aux propriétés recherchées pour la couche en question. En particulier, selon l'invention il est avantageux d'utiliser des métaux dont les oxydes ou oxy-nitrures offrent simultanément une bonne transparence aux longueurs d'ondes du visible de même qu'un indice de réfraction relativement élevé.

En dehors du silicium, parmi les métaux combinés au titane dans la couche à base d'oxyde de titane, on utilise avantageusement selon l'invention un ou plusieurs métaux du groupe comprenant : Zr, Ta, Nb,V Nd, Ce, Hf., W, Mo, La, Al, Y.

Les métaux préférés étant ceux dont les oxydes ont les indices de réfraction les plus élevés, on utilise le plus volontiers Zr, Ta, Nb seuls ou en mélange et tout particulièrement Zr. Le choix des métaux additionnels est de préférence tel que les oxydes TiMOx ou oxy-nitrures TiMOxNy présentent un indice de réfraction supérieur à 2,2 et avantageusement supérieur à 2,3.

Les métaux ou le silicium dans les couches à base d'oxyde ou d'oxy-nitrure de titane sont introduits avantageusement à partir de cibles métalliques ou de silicium, ou des cibles céramiques, correspondant aux compositions recherchées de telle sorte que le dépôt obtenu corresponde effectivement à un mélange intime des oxydes métalliques, ou de silicium, mélange qui s'oppose à la formation de structures cristallographiques régulières de dimensions significatives.

Le dépôt, en particulier pour les oxydes, est effectué de préférence en atmosphère oxydante. Pour les cibles céramiques l'atmosphère peut être neutre, notamment d'argon, ou légèrement oxydante. Pour les cibles métalliques ou de silicium, l'atmosphère est oxydante.

Les oxy-nitrures sont déposés en atmosphère comportant de l'azote. Comme il est connu le titane réagit plus facilement avec l'oxygène qu'avec l'azote. Pour obtenir la formation de ces oxy-nitrures la proportion d'azote dans l'atmosphère du dépôt doit être relativement importante. A titre indicatif si le dépôt est fait à partir de cathodes métalliques en atmosphère contenant simultanément de l'oxygène et de l'azote, le rapport $N_2/O_2$ sera avantageusement supérieur à 2 pour avoir une quantité d'azote significative dans l'oxy-nitrure. Cette proportion peut aller jusqu'à 3 ou 4 pour obtenir une teneur en azote dans l'oxy-nitrure qui soit supérieure à 10%.

La présence d'azote dans l'oxy-nitrure de titane, comme celle du métal ou du silicium additionnel, tend à rendre moins aisée la transformation structurelle de l'oxyde de titane lors du traitement thermique. L'azote dans l'oxy-nitrure de titane peut conduire cependant à accroître le coefficient d'extinction de la couche, autrement dit à réduire un peu la transmission lumineuse, et à favoriser l'apparition d'un voile. Pour ces raisons la présence d'azote doit être bien contrôlée pour optimiser les propriétés.

De façon générale, la présence d'azote dans l'oxy-nitrure de titane modifié, ne dépasse pas habituellement 30% dans le rapport $N_2/O_2$, et de préférence est inférieur à 25% et de façon particulièrement préférée est inférieur à 20%.

Plus la teneur en métal ou silicium supplémentaire est élevée plus le « désordre » dans la structure de l'oxyde de titane est établi, et donc moins l'oxyde de titane est susceptible de constituer un réseau modifiable sous l'effet d'un traitement thermique de type bombage trempe. A l'inverse l'utilisation d'une forte proportion de métaux ou de silicium supplémentaires, tend à abaisser l'indice de réfraction de l'ensemble, l'oxyde de titane présentant l'indice le plus élevé.

De manière à obtenir un effet stabilisant significatif la teneur en métal additionnel ou silicium est d'au moins 10% atomique par rapport au Ti dans le mélange. Il est de préférence supérieur à 15% et de manière particulièrement préférée supérieure à 20%.

Pour conserver le plus possible les propriétés de l'oxyde de titane base de la couche, la proportion atomique en métal ou silicium additionnel est de préférence au plus de 60% et de préférence ne dépasse pas 50%.

Pour une modification significative de ces chemins optiques, l'épaisseur de la couche TiMOx ou TiMOxNy est avantageusement au moins égale à 6nm, de préférence au moins égale à 8nm et de façon particulièrement préférée au moins égale à 10nm.

En plus de la ou des couches TiMOx ou TiMOxNy mises en oeuvre selon l'invention, pour favoriser la formation de couches à base d'argent conduisant aux meilleures propriétés notamment de conduction électrique ou de basse émissivité, il est avantageux selon l'invention de disposer sous la ou les couches à base d'argent, et en contact avec cette ou ces couches, une couche à base d'oxyde de zinc d'épaisseur limitée. La couche à base d'oxyde de zinc favorise la croissance de la couche à base d'argent pour autant que son épaisseur reste telle qu'elle ne se développe pas sous forme colonnaire.

La couche à base d'oxyde de zinc peut comprendre des éléments « dopants » en faible quantité. Ces éléments sont notamment Al, Sn, ou Mg. Ils sont avantageusement en quantité atomique inférieure à 15% et de préférence inférieure à 10%.

Une couche particulièrement préférée est constituée d'un oxyde de zinc comprenant entre 3 et 6% de Sn.

L'épaisseur de la couche à base d'oxyde de zinc est avantageusement inférieure à 10nm, et de préférence inférieure à 8nm.

Les couches à base d'argent sont avantageusement protégées de façon traditionnelle par une couche barrière ou sacrificielle. Le rôle de cette couche est principalement de prévenir la dégradation de la couche à base d'argent lors de la formation des couches diélectriques superposées à ces couches à base d'argent. Pour cela la couche barrière est formée d'un métal qui réagit dans les atmosphères susceptibles de dégrader l'argent.

Les couches barrières les plus utilisées sont traditionnellement celles qui permettent ce type de protection et ne réduisent pas de façon significative les propriétés optiques de l'ensemble. On utilise des couches métalliques très peu épaisses pour ne pas réduire la transmission lumineuse. Ces couches sont en outre de préférence mises en oeuvre dans des conditions telles que dans l'ensemble constitué elles soient transformées le plus possible en diélectriques transparents, la transformation intervenant en particulier au cours du dépôt réactif des couches situées au dessus de ces couches barrière.

Des métaux et alliages préférés pour constituer ces couches barrière sont notamment : Ti, Zn, Sn, Zr, Cr, et NiCr. Les constituants préférés sont Ti et les alliages NiCr, et pour ces derniers les alliages constitués dans les proportions voisines de 80/20. Les barrières à base de titane sont préférées dans la mesure où elles offrent, une fois oxydées, une très faible absorption lumineuse. Les barrières à base de NiCr ont l'avantage de se prêter à un contrôle relativement précis de leur degré d'oxydation. Ces barrières au moins partiellement oxydées sont du type $TiO_w$ (avec $w \leq 2$) ou $NiCrO_v$.

En raison de leurs avantages respectifs, une combinaison de barrières de Ti et d'alliage NiCr est également particulièrement avantageuse. Le choix de préférence est alors de disposer la barrière NiCr au contact de la couche à base d'argent et de lui superposer une barrière Ti.

Dans tous les cas la ou les barrières sont de préférence de très faible épaisseur. Ensemble elles restent avantageusement inférieures à 10nm et de préférence inférieures à 8nm. Séparément, chacune des couches barrière, présente une épaisseur qui n'est pas supérieure à 6nm.

La composition de l'ensemble des couches formant filtre interférentiel, destiné notamment à la maîtrise de la transmission lumineuse et de la neutralité de couleur notamment en réflexion, comprend éventuellement des couches diélectriques supplémentaires situées sous la couche TiMOX ou TiMOxNy, ou au dessus de celle-ci, ou encore au dessus et en dessous.

Parmi les couches diélectriques supplémentaires préférées figurent notamment au moins une couche d'oxyde de zinc ou d'un mélange d'oxyde de zinc et d'étain, d'aluminium ou de magnésium, dans des proportions atomiques Zn/Sn, Zn/Al, Zn/Mg comprises entre 30 et 70%.

L'épaisseur de ces couches additionnelles est commandée notamment par celle de la couche TiMOx ou TiMOxNy, pour établir le chemin optique à une valeur satisfaisante pour constituer le filtre interférentiel correspondant à l'épaisseur de la couche d'argent choisie.

Les assemblages de couches selon l'invention sont remarquables par la qualité des couches d'argent qu'ils permettent d'obtenir après traitement thermique. Cette qualité se traduit pour une émissivité donnée par la quantité d'argent nécessaire pour atteindre cette émissivité. Plus petite est cette quantité meilleure est la couche d'argent.

Pour des couches à base d'argent unique, la teneur pour les vitrages selon l'invention se situe avantageusement entre 80 et $160mg/m^2$, et de préférence entre 100 et $140mg/m^2$.

Les vitrages selon l'invention sont avantageusement tels qu'après un traitement thermique à une température qui n'est pas inférieure à 650°C pendant une durée d'au moins 3 minutes, la qualité de la ou des couches d'argent est telle que le produit de la masse d'argent par unité de surface exprimée en $mg/m^2$ par l'émissivité normale ($Qx\varepsilon$) est inférieur à 5 de préférence inférieur à 4,8 et de façon particulièrement préférée inférieur à 4,6.

L'invention est décrite de façon détaillée dans la suite, en faisant référence aux planches de dessins dans lesquelles :

- la figure 1 représente un vitrage selon l'invention comprenant un ensemble de couches dont une couche réfléchissant les infrarouges ;
- la figure 2 présente un vitrage selon l'invention comportant un autre ensemble de couches dont une couche réfléchissant les infrarouges ;
- la figure 3 représente un vitrage selon l'invention comportant un ensemble de couches dont deux couches réfléchissant les infrarouges.

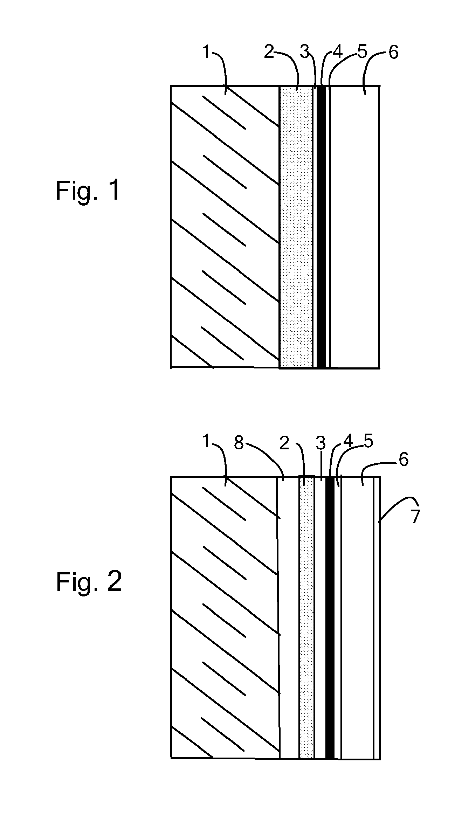

La figure 1 représente en coupe schématique une feuille de verre 1 comportant un système de couches, lequel comprend une couche 4 réfléchissant les infrarouges à base d'argent. La couche à base d'argent peut le cas échéant être «dopée» d'un métal qui favorise sa structure cristalline ou sa durabilité. Un tel métal est par exemple de façon connue du palladium le platine, le nickel et le silicium.

De part et d'autres de l'argent des couches diélectriques forment le filtre interférentiel et protègent l'argent au cours de la constitution de l'ensemble et ultérieurement au cours de la vie du vitrage.

Selon l'invention au moins une couche diélectrique 2 est constituée d'un oxyde mixte ou oxy-nitrure mixte de titane et d'un autre métal ou de silicium de type TiOx ou TiOxNy.

La couche 4 située sous l'argent, lorsque l'ensemble est soumis à un traitement thermique vigoureux doit conserver sensiblement sa structure, contrairement au comportement d'une couche analogue traditionnelle à base de $TiO_2$.

Une couche 3 relativement mince à base d'oxyde de zinc et comprenant le cas échéant un métal dopant tel que Zn, Al ou Mg, est avantageusement disposée au contact direct de la couche à base d'argent. Cette couche favorise la croissance de la structure de la couche à base d'argent. Relativement mince en comparaison des couches diélectriques 2 ou 6 conférant l'essentiel des caractéristiques de filtre en combinaison avec la couche à base d'argent, cette couche 3 vis-à-vis de la couche à base d'argent ne masque pas la restructuration des couches sous-jacentes lorsque de tels changement s interviennent lors notamment d'un traitement thermique. Pour que la couche à base d'argent ne soit pas altérée, il est nécessaire suivant l'enseignement de l'invention que la couche 2 ne présente elle-même pas de modification significative de sa structure.

Au dessus de l'argent traditionnellement figure une couche barrière 5 de faible épaisseur, qui prévient l'oxydation de l'argent lors du dépôt de couches déposées ultérieurement. Dans le cas représenté la couche diélectrique la plus externe est une couche épaisse 6, qui complète le filtre interférentiel.

La structure représentée à la figure 2, est analogue à la précédente. Les couches semblables sont référencées comme à la figure 1. Cette structure comprend en plus des couches précédemment décrites, une couche superficielle 7, et un deuxième diélectrique 8 situé au contact de la feuille de verre 1.

La qualité principale des diélectriques 6 étant de contribuer à la constitution du filtre interférentiel, le choix de ces diélectriques est fonction de leurs propriétés optiques : indice, transparence etc. Ces diélectriques n'ont pas tous les qualités mécaniques qui garantissent une bonne résistance de l'ensemble des couches dans la mise en oeuvre des vitrages. En particulier les couches ne sont pas toujours suffisamment résistantes aux rayures qui peuvent être occasionnées dans le stockage ou le transport.

Pour cette raison il est connu de protéger l'ensemble des couches par le dépôt superficiel de couches très résistantes et qui contribuent très peu aux propriétés optiques. Des couches préférées sont par exemple d'oxyde de titane. L'épaisseur de ces couches est limitée à ce qui est utile pour conférer la résistance mécanique recherchée.

La couche diélectrique 8 contribue à la formation des propriétés optiques de l'ensemble. Elle est généralement relativement épaisse. Cette couche intervient aussi pour protéger l'ensemble contre les migrations d'ions en provenance de la feuille de verre 1, migrations qui sont facilitées par le traitement thermique.

Des couches traditionnelles pour cet usage sont notamment les couches d'oxydes mixtes de zinc et d'étain. Ces oxydes mixtes ont l'avantage d'être produits de manière relativement commode, et ajoutent à de bonnes propriétés optiques, une structure bien homogène sans formation colonnaires qui caractérisent par exemple les oxydes de zinc en couches épaisses.

L'ordre des couches n'est pas nécessairement celui représenté à savoir une couche 8 épaisse et d'indice moindre que celui de la couche 2 à base de TiOMx ou TiOMxNy. L'ordre des couches peut être inversé la couche 2 étant par exemple au contact du verre et recouverte par la couche 8.

Des couches supplémentaires peuvent encore figurer dans l'assemblage. Partant de la structure représentée à la figure 2 il est possible par exemple d'ajouter une couche entre la couche 2 et la couche 3. Cette couche est par exemple de même nature que la couche 8, mais elle peut aussi être différente.

De la même manière la couche 6 peut être associée à une autre couche diélectrique située au dessus ou au dessous de la couche 6.

La couche barrière 5 peut être simple ou composée elle-même de plusieurs couches. En particulier, comme indiqué précédemment il peut s'agir d'un ensemble comprenant une première couche d'oxyde de NiCr et d'une couche d'un oxyde titane.

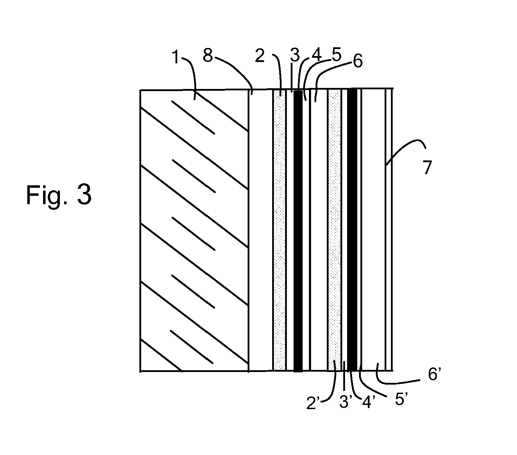

La figure 3 présente de façon schématique une structure comportant deux couches à base d'argent 4 et 4'. L'utilité des doubles couches d'argent est bien connue de l'art antérieur. Au prix d'un coût supérieur du fait de la complexité introduite par la multiplicité des couches à déposer, la présence de deux couches d'argent permet d'une part d'améliore encore l'émissivité des vitrages et de mieux contrôler la neutralité de couleur en réflexion.

Toujours pour les mêmes raisons il est aussi possible de mettre en oeuvre trois couches d'argent. Au-delà le bénéfice de couches d'argent supplémentaire est généralement peu significatif au regard de la complexité des systèmes correspondants.

La figure 3 montre à propos des couches additionnelles (2',3',4',5',6') comme précédemment un assemblage comportant des couches (2' et 3') favorisant la formation d'une couche d'argent présentant une structure adéquate pour présenter notamment la meilleure qualité en terme de conduction et d'émissivité, une ou des couches barrière (5') protégeant la couche à base d'argent (4') contre une possible dégradation au cours du dépôt des couches qui lui sont superposées, et une ou plusieurs couches diélectriques (6') pour compléter le filtre.

Comme précédemment à propos de la figure 2, l'ordre des couches à fonction essentiellement optique peut être changé de même que le nombre des couches mises en oeuvre.

A titre d'exemple de mise en oeuvre de l'invention des systèmes de couches comportant ou non les couches d'oxyde ou d'oxy-nitrure, TiOMx ou TiOMxNy, ont été comparés à la fois pour leur émissivité et leur neutralité en réflexion.

Exemple comparatif

Comme base de la comparaison le système suivant est utilisé en partant du verre :

$$ZnSnO(50/50)/ZnSnO(90/10)/Ag/TiOw/ZnSnO(90/10)/ZnSnO(50/50)/Ti\,O_2$$
$$280 \qquad 80 \qquad 120 \qquad 50 \qquad 80 \qquad 235 \qquad 60$$

Les épaisseurs des couches sont exprimées en Angstrôm pour les diélectriques et en mg/m$^2$ pour l'argent.

Les dépôts sont effectués en atmosphère oxydante à partir de cibles métalliques pour les diélectriques, et en atmosphère neutre (argon) pour la couche d'argent et pour la couche barrière TiOw.

On procède au dépôt d'un ensemble de couches analogues en réduisant la première couche ZnSnO(50/50) à 180 Angstrôm, et en déposant sur cette couche en atmosphère faiblement oxydante, à partir d'une cible céramique constituée d'oxyde de titane, une couche de 100Angströms. La structure de ce système est en conséquence :

$$ZnSnO(50/50)/TiO_2/ZnSnO(90/10)/Ag/TiOw/......$$
$$180 \qquad 100 \qquad 80 \qquad 120 \qquad 50$$

Les systèmes sont soumis à un traitement thermique à 650°C pendant trois minutes dans un four préchauffé et en atmosphère d'air. Les mesures d'émissivité normale, de voile (haze) et de colorimétrie en réflexion suivant le système CIE-LAB sont indiquées dans le tableau suivant :

| | émissivité | voile | L* | a* | b* |
|---|---|---|---|---|---|
| référence | 0,040 | 4 | 42,62 | - 0,65 | - 8,08 |
| avec TiO$_2$ | 0,073 | 4 | 42,94 | - 1,23 | - 6,32 |

Ces résultats montrent que l'introduction de la couche TiO$_2$ sous l'argent entraine une altération significative de l'émissivité de cette couche (et donc aussi de sa conduction électrique). Cette altération est attribuée à la modification de la nature cristallographique de la couche TiO$_2$ lorsque celle-ci est soumise au traitement thermique.

Exemple 1

Suivant l'invention on procède de façon analogue en remplaçant la couche de 100 Angstrôm de TiO$_2$ par une couche de même épaisseur constituée d'un oxyde mixte de titane et de zirconium. Le dépôt de cette couche est effectué en atmosphère faiblement oxydante, à partir d'une cible céramique constituée en pourcentage pondéral de 50% de TiO, 46% de ZrO et 4% YO. La structure du système devient alors :

$$ZnSnO(50/50)/TiZrYOx/ZnSnO(90/10)/Ag/TiOw/ZnSnO(90/10)/......$$
$$180 \qquad 100 \qquad 80 \qquad 120 \qquad 50 \qquad 80$$

Le résultat de l'épreuve est donné dans le tableau suivant :

| | émissivité | voile | L* | a* | b* |
|---|---|---|---|---|---|
| TiZrYO (50%Zr) | 0,038 | 1,5 | 40,18 | 2,6 | - 4,3 |

Contrairement à l'exemple précédent la qualité de l'argent (Qx$\varepsilon$ = 4,56) dans ces conditions n'est pas altérée par l'introduction de la couche à fort indice TiZrYO, et l'émissivité reste très faible en dépit d'un quantité d'argent relativement limitée.

Exemple 2.

Un essai analogue est réalisé en remplaçant la cible utilisée pour le dépôt d'oxyde mixte de titane et de zirconium. Le taux de zirconium est ramené à 25% en poids, le taux de titane compensant cette baisse. Les résultats suivant les mêmes conditions d'épreuve sont reportés dans le tableau suivant :

|  | émissivité | voile | L* | a* | b* |
|---|---|---|---|---|---|
| TiZrYO (25%Zr) | 0,041 |  | 40,83 | 0,97 | - 5,31 |

Avec la couche modifiée en proportions moindre que précédemment, on constate encore que cette couche à fort indice de réfraction n'altère sensiblement pas la qualité de l'émissivité lorsque le vitrage est soumis au traitement thermique.

Exemple 3.

Un essai analogue à celui de l'exemple 1 est réalisé cette fois en déposant la couche à base de titane et de zirconium (50%) dans une atmosphère d'azote. En utilisant la cible céramique le dépôt obtenudans ces conditions est un oxy-nitrure, l'oxygène de la cible entrant majoritairement dans la composition de la couche.
Le résultat de cet essai est le suivant :

|  | émissivité | voile | L* | a* | b* |
|---|---|---|---|---|---|
| TiZrYON (50%Zr) | 0,041 | 2 | 42,45 | 1,8 | - 7,3 |

Comme précédemment on constate que l'introduction d'une couche d'oxy-nitrure mixte de Ti et Zr résiste bien à l'épreuve thermique. La qualité de la couche d'argent n'est pas sensiblement altérée.

Exemple 4.

Dans cet essai la couche à base d'oxyde mixte est déposée également en atmosphère d'azote. La cible céramique est constituée d'un mélange de titane et de silicium (8% en poids).
Les résultats figurent dan le tableau suivant :

|  | émissivité | voile | L* | a* | b* |
|---|---|---|---|---|---|
| TiSiO(8%Si) | 0,041 | 3,5 | 42,54 | 1,38 | - 8,3 |

Exemple 5.

Il est procédé comme aux exemples précédents en utilisant cette fois une couche d'oxyde mixte de titane et de niobium de 100Å, les autres couches étant celles présentées ci-dessus. La couche d'oxyde mixte est déposée en milieux faiblement oxydant à partir d'une cible céramique d'oxyde de titane te d'oxyde $Nb_2O_5$ comprenant 30% en pois de $Nb_2O_5$.
Les résultats figurent dan le tableau suivant :

|  | émissivité | voile | L* | a* | b* |
|---|---|---|---|---|---|
| TiNbO | 0,043 | 2,0 | 40,74 | -0,45 | - 3,41 |

La couche d'oxyde mixte de titane et de niobium, comme celle de titane et zirconium, est bien stable à l'épreuve thermique. La couche d'argent conserve de bonnes propriétés, et la coloration en réflexion est très neutre.

Exemple 6.

Deux essais complémentaires sont effectués avec les mêmes oxydes mixtes de titane et de niobium, mais sans couche à base d'oxyde de zinc sous l'argent. Le premier système est constitué de la façon suivante en partant du verre :

$$ZnSnO(50/50)/TiNbOx/Ag/TiOw/ZnSnO(90/10)/ZnSnO(50/50)/TiO_2$$
$$250 \qquad 100 \qquad 120 \qquad 50 \qquad 80 \qquad 235 \qquad 60$$

Le second système est de même composition mais la couche d'oxyde mixte de titane et niobium n'a que 80Å d'épaisseur au lieu de 100Å.

Les résultats figurent dan le tableau suivant :

| TiNbO | émissivité | voile | L* | a* | b* |
|-------|-----------|-------|-------|--------|--------|
| (a) | 0,042 | 2,0 | 40,74 | - 0,5 | - 4,72 |
| (b) | 0,041 | 2,0 | 41,22 | - 0,49 | - 6,16 |

Comme le montrent ces résultats, dans l'exemple considéré, la présence de la couche à base d'oxyde de zinc sous l'argent, peut être omise sans que le traitement thermique n'affecte de façon sensible les performances de la couche d'argent ou les caractéristiques colorimétriques en réflexion.

## Revendications

1. Vitrage revêtu d'un ensemble de couches minces par des techniques de dépôt sous vide ("sputtering") lui conférant des propriétés de réflexion des rayonnements infrarouges tout en conservant une transmission élevée dans le domaine visible, couches dont les propriétés notamment de réflexion dans l'infrarouge ne sont pas sensiblement altérées lorsque ce vitrage est soumis à un traitement thermique de type bombage/trempe, et comprenant une ou plusieurs couches à base d'argent et des couches diélectriques dont au moins une couche diélectrique sous-jacente par rapport à au moins une couche à base d'argent est une couche à base d'oxyde ou d'oxy-nitrure de titane de type TiMOx ou TiMOxNy, dans laquelle M est un métal, ou plusieurs métaux, ou le silicium, ces métaux ou silicium étant en proportion atomiques suffisantes pour prévenir une transformation significative de la structure cristallographique de la couche à base d'oxyde de titane précédemment déposée sous l'effet du traitement thermique.

2. Vitrage selon la revendication 1 dans lequel le ou les métaux entrant dans la composition de la couche à base d'oxyde ou d'oxy-nitrure de titane appartiennent au groupe comprenant Zr, Nb, Hf, Ta, Nd, V, Ce, W, Mo, La, Y, Al.

3. Vitrage selon l'une des revendications précédentes dans lequel la proportion atomique du ou des métaux ou du silicium associés au titane dans la couche à base d'oxyde de titane ou d'oxy-nitrure de titane, M/Ti n'est pas inférieure à 10%, de préférence supérieure à 15% et de façon particulièrement préférée supérieure à 20%.

4. Vitrage selon l'une des revendications précédentes dans lequel dans la couche à base d'oxy-nitrure de titane la proportion $N_2/O_2$ n'est pas supérieure à 30% et de préférence pas supérieure à 25% , et de façon particulièrement préférée pas supérieure à 20%.

5. Vitrage selon l'une des revendications précédentes dans lequel la couche à base d'oxyde ou d'oxy-nitrure de titane présente une épaisseur qui n'est pas inférieure à 6nm, de préférence pas inférieure à 8nm et de façon particulièrement préférée, pas inférieure à 10nm.

6. Vitrage selon l'une des revendications précédentes dans lequel le ou les métaux ou le silicium entrant dans la composition de la couche à base d'oxyde ou d'oxy-nitrure de titane sont choisis de telle sorte et en proportions telles, que la couche en question présente un indice de réfraction supérieur à 2,2 et de préférence supérieur à 2,3.

7. Vitrage selon l'une des revendications précédentes dans lequel sous l'une au moins des couches à base d'argent, et en contact avec celle-ci, se situe une couche à base d'oxyde de zinc d'épaisseur au plus égale à 10nm et de préférence au plus égale à 8nm.

8. Vitrage selon la revendication 7 dans lequel la couche à base d'oxyde de zinc est une couche type ZnO, ZnAlOz, ZnSnOz ou ZnMgOz, dans lesquelles la proportion atomique de Al/Zn, Sn/Zn ou Mg/Zn n'est pas supérieure à 15% et de préférence pas supérieure 10%.

9. Vitrage selon l'une des revendications précédentes dans lequel au moins une couche à base d'argent est couverte par au moins une couche barrière à base de titane TiOw avec w≤2, ou une couche NiCrOv ou les deux.

10. Vitrage selon la revendication 9 dans lequel la ou les couches TiOw et /ou NicrOv, ensemble ont une épaisseur qui n'est pas supérieure à 10nm et de préférence pas supérieure à 8nm, chacune de ces couches individuellement ayant une épaisseur qui n'est pas supérieure à 6nm.

11. Vitrage selon l'une des revendications précédentes comprenant une seule couche à base d'argent en une quantité comprise entre 80 et 160mg/m$^2$ et de préférence entre 100 et 140mg/m$^2$.

12. Vitrage selon la revendication 11 dans lequel après un traitement thermique à une température supérieure à 650°C et pendant une durée d'au moins 3 minutes la qualité de la ou des couches à base d'argent est telle que

$$Qx\varepsilon < 5,0$$

de préférence

$$Qx\varepsilon < 4,8$$

de façon particulièrement préférée

$$Qx\varepsilon < 4,6$$

Q étant exprimé en mg/m$^2$, et $\varepsilon$ étant l'émissivité normale.

13. Vitrage selon l'une des revendications précédentes comprenant un ensemble de couches :

    verre/TiMOx ou TiMoxNy/ZnO ou ZnAlOz ou ZnSnOz ou ZnMgOz/Ag/barrière/ diélectrique II.

14. Vitrage selon la revendication 13 comprenant en plus une ou plusieurs couches diélectriques située(s) entre le verre et la couche TiMOx ou TiMoxNy, ou/et au-dessus de cette couche sous la couche ZnO ou ZnAlOz ou ZnSnOz ou ZnMgOz.

15. Vitrage selon la revendication 14 répondant à l'une des structures :

    - verre/diélectrique/TiMOx ou TiMoxNy/ZnO ou ZnAlOz ou ZnSnOz ou ZnMgOz/Ag/barrière/ diélectrique II,
    - verre/TiMOx ou TiMoxNy/diélectrique/ZnO ou ZnAlOz ou ZnSnOz ou ZnMgOz/Ag/barrière/ diélectrique II
    - verre/diélectrique/TiMOx ou TiMoxNy/diélectrique/ZnO ou ZnAlOz ou ZnSnOz ou ZnMgOz/Ag/barrière/ diélectrique II,

les couches diélectriques additionnelles pour cette dernière structure étant identiques ou différentes.

16. Vitrage selon la revendication 15 dans lequel parmi la ou les couches diélectriques supplémentaire figure au moins une couche à base d'oxyde mixte de zinc et d'étain avec une proportion pondérale Zn/Sn comprise entre 30 et 70%.

17. Vitrage selon l'une des revendications 1 à 10 comprenant au moins deux couches à base d'argent, comprenant sous chacune de ces couches au moins un ensemble de couches

TiMOx ou TiMoxNy/ZnO ou ZnAlOz ou ZnSnOz ou ZnMgOz.

18. Vitrage selon la revendication 16 dans lequel en plus de la couche TiMOx ou TiMoxNy, une ou plusieurs couches diélectriques supplémentaires situées au dessus et/ou au-dessus de cette couche TiMOx ou TiMoxNy.

Fig. 1

Fig. 2

Fig. 3

Office européen
des brevets

**RAPPORT DE RECHERCHE EUROPEENNE**

Numéro de la demande

EP 07 10 4429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/097513 A (GLAVERBEL [BE]; DECROUPET DANIEL [BE]; DEPAUW JEAN-MICHEL [BE]) 21 septembre 2006 (2006-09-21) <br> * page 13, ligne 14 - page 16, ligne 20 * <br> * page 24, ligne 1 - page 26, ligne 11 * <br> * page 22, ligne 4-7 * <br> * revendications 1-28; figures 3,4; tableaux * <br> ----- | 1-16,18 | INV. C03C17/36 |
| X | EP 1 538 131 A (SCHEUTEN GLASGROEP [NL]; SEMCO GLASBESCHICHTUNG GMBH [DE]) 8 juin 2005 (2005-06-08) <br> * alinéas [0002], [0024], [0031], [0033], [0041]; figure 1; tableau 3 * <br> ----- | 1-3,5-8, 11,12, 14-18 | |
| X | EP 0 995 724 A1 (SAINT GOBAIN VITRAGE [FR] SAINT GOBAIN [FR]) 26 avril 2000 (2000-04-26) <br> * alinéas [0001], [0004], [0022], [0023], [0030], [0033]; exemple 1 * <br> * revendications 1-18 * <br> ----- | 1-3,5-8, 11-13,16 | |
| X | DE 10 2005 039707 A1 (SAINT GOBAIN GLASS DEUTSCHLAND [DE]) 1 mars 2007 (2007-03-01) <br><br> * alinéas [0001], [0002], [0013], [0014] * <br> ----- | 1-3,5,6, 11,12, 14,15 | DOMAINES TECHNIQUES RECHERCHES (IPC) <br><br> C03C |
| X | US 2004/241490 A1 (FINLEY JAMES J [US]) 2 décembre 2004 (2004-12-02) <br> * alinéas [0009] - [0017], [0021] - [0025], [0069], [0071]; figures 1,20; exemples * <br> ----- | 1-6,17 | |
| A | EP 1 630 142 A (CARDINAL CG CO [US]) 1 mars 2006 (2006-03-01) <br> * alinéas [0012], [0014], [0029], [0035], [0049] * <br> ----- | 1-18 | |

-/--

Le présent rapport a été établi pour toutes les revendications

| Lieu de la recherche | Date d'achèvement de la recherche | Examinateur |
|---|---|---|
| Munich | 6 août 2007 | Wrba, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 980 539 A1**

**Office européen des brevets**

# RAPPORT DE RECHERCHE EUROPEENNE

Numéro de la demande

EP 07 10 4429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 331 201 A1 (ASAHI GLASS CO LTD [JP]) 6 septembre 1989 (1989-09-06) * figure 1d; tableau 2 * ----- | 1-18 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 6 août 2007 | Wrba, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 4429

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-08-2007

| Document brevet cité<br>au rapport de recherche | | Date de<br>publication | Membre(s) de la<br>famille de brevet(s) | | Date de<br>publication |
|---|---|---|---|---|---|
| WO 2006097513 | A | 21-09-2006 | BE | 1016553 A3 | 09-01-2007 |
| EP 1538131 | A | 08-06-2005 | AUCUN | | |
| EP 0995724 | A1 | 26-04-2000 | AT<br>CA<br>FR<br>JP<br>PL<br>US | 356096 T<br>2286440 A1<br>2784985 A1<br>2000129464 A<br>336180 A1<br>6210784 B1 | 15-03-2007<br>22-04-2000<br>28-04-2000<br>09-05-2000<br>25-04-2000<br>03-04-2001 |
| DE 102005039707 | A1 | 01-03-2007 | WO | 2007042688 A1 | 19-04-2007 |
| US 2004241490 | A1 | 02-12-2004 | AUCUN | | |
| EP 1630142 | A | 01-03-2006 | AUCUN | | |
| EP 0331201 | A1 | 06-09-1989 | AU<br>CA<br>DE<br>DE<br>DE<br>DE<br>ES<br>US | 3087989 A<br>1338431 C<br>68906923 D1<br>68906923 T2<br>68928474 D1<br>68928474 T2<br>2041856 T3<br>5110637 A | 07-09-1989<br>02-07-1996<br>15-07-1993<br>03-02-1994<br>15-01-1998<br>02-04-1998<br>01-12-1993<br>05-05-1992 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5110662 A